# FASCICULE DE BREVET EUROPEEN

(11) **EP 0 263 029 B1**
(45) Date de publication et mention de la délivrance du brevet: **21.07.1993**
(21) Numéro de dépôt: 87402177.7
(22) Date de dépôt: 30.09.1987
(51) Int. Cl.: C04B 26/04, C03C 25/02

(54) **Produit isolant réalisé in-situ, fibres ou particules entrant dans sa composition et procédé de préparation**
In-situ hergestelltes wärmedämmendes Produkt, in seiner Zusammensetzung enthaltene Fasern oder Teilchen und Herstellungsverfahren
Insulating product made in situ, fibres or particles included in its composition, and production process

(30) Priorité: 01.10.1986 FR 8613703
(43) Date de publication de la demande: 06.04.1988
(73) Titulaire: ISOVER SAINT-GOBAIN, F-92400 Courbevoie (FR)
(72) Inventeur: Bernard, Jean-Luc, F-60600 Giencourt (FR); Serein, Etienne, F-60100 Creil (FR)
(74) Mandataire: Leconte, Jean-Gérard

(56) Documents cités:
- EP-A- 0 011 572
- US-A- 3 135 648
- US-A- 3 650 818

## Description

La présente invention concerne le secteur de la construction et plus particulièrement celui du revêtement, notamment de l'isolation avec des produits, notamment isolants, réalisés in-situ à partir de particules ou de fibres minérales et de liants projetés.

Il est connu par le brevet français 2 442 807 ou son équivalent EP-A-11572, d'isoler un support en projetant sur lui d'abord un liant organique constitué par un agent filmogène en solution colloïdale dans un solvant, puis simultanément, d'une part, par une première buse, du même liant organique que précédemment en solution colloïdale et d'autre part, par une seconde buse, un mélange de particules, notamment de fibres minérales, et d'un agent en poudre de coagulation du liant organique, en particulier du borax, et éventuellement de pigments et de charges.

Cette technique est essentiellement employée pour l'isolation de locaux industriels, et lorsqu'il s'agit plus particulièrement de plafonds, du fait de l'action de la gravité sur les produits projetés, on observe un hétérogénéité dans l'épaisseur de l'isolant obtenu, une migration du liant et des éventuels pigments de coloration dans l'épaisseur et leur rassemblement en surface, ce qui se traduit par la formation d'une croûte inesthétique et techniquement néfaste, notamment du point de vue acoustique et du point de vue résistance au feu.

Ces inconvénients sont dûs, au moins en partie au fait que le liant distribué indépendamment des particules, des fibres en particulier, ne les atteint pas toutes et donc, est à la fois non uniformément réparti et mal retenu par lesdites particules ou fibres.

Il a été essayé de diminuer la quantité de liant projeté pour réduire le risque feu, mais dans ce cas, les propriétés mécaniques de l'isolant formé sont insuffisantes.

Par ailleurs, la quantité de liant projeté en même temps que les particules, les fibres en particulier, dépend des réglages effectués par le projeteur. Ces réglages sont modifiables pendant la projection et laissés au libre choix du projeteur si bien que la proportion de liant peut être fortement accrue notamment en vue d'améliorer l'accrochage des particules sur le support, il en résulte alors un "risque feu" augmenté.

En outre, la trop grande multiplicité de produits à amener sur un chantier, le risque de gel du liant l'hiver, constituent des inconvénients supplémentaires.

Il est connu par le brevet US-3,135,648 d'obtenir un adhésif à base de polymère organique, par mélange dudit polymère avec un coagulant et un acide, puis par addition audit mélange d'eau, de manière à réticuler le polymère. La réaction se fait classiquement sous agitation à haute température, et nécessite donc appareillage spécifique, pour obtenir une colle. Celle-ci ne bénéficie de plus d'aucune propriété d'isolation.

La présente invention vise à fournir un revêtement, et en particulier une isolation, réalisable in situ par projection, dans lequel les inconvénients précités de l'art antérieur sont supprimés, dans lequel en particulier la répartition du liant dans l'épaisseur du revêtement et notamment de l'isolant réalisé est plus homogène, ce qui conduit à de meilleures caractéristiques techniques dudit revêtement par exemple isolant , dans lequel également les proportions de liant organique sont bien contrôlées pour éviter le "risque feu".

Dans un développement intéressant de l'invention, il est également possible de résoudre le problème de la multiplicité des produits nécessaires sur un chantier, de façon à n'avoir plus à projeter que de l'eau en même temps que les fibres.

Pour cela, l'invention propose une fibre de verre ou de roche du type destiné à constituer un matelas de laine isolante revêtue d'un film de polymère à base d'alcool polyvinylique possédant des fonctions hydrophiles libres, réactivables ultérieurement par l'eau pour permettre la réticulation du polymère en présence d'un agent de réticulation ou de coagulation adapté.

Avantageusement, ces fonctions hydrophiles réactivables sont des fonctions carboxyliques.

Avantageusement, le polymère est incomplètement saponifié.

Dans une forme préférée, l'invention propose de réaliser un mélange de telles fibres revêtues avec l'agent de coagulation en poudre, ce mélange s'obtenant par déchiquetage du feutre de fibres séché et formé à la sortie de l'unité de fabrication et de revêtement des fibres, pour former des amas élémentaires ou flocons desdites fibres auxquels on ajoute la poudre.

L'invention propose également une application dans le domaine de la construction de telles fibres de verre ou de roche ainsi revêtues à la réalisation d'un revêtement, en particulier isolant, sur un support consistant essentiellement à projeter sur le support, simultanément d'une part des fibres revêtues de leur polymère réactivable, et d'autre part en solution ou en dispersion notamment dans l'eau, l'agent de coagulation.

L'invention propose une autre variante d'application dans le domaine de la construction de telles fibres de verre ou de roche ainsi revêtues à la réalisation d'un revêtement, notamment isolant, sur un support consistant essentiellement à projeter sur le support, simultanément d'une part les fibres revêtues de leur polymère réactivable dont des amas élémentaires ou flocons sont mélangés avec de la poudre d'agent de coagulation, d'autre part de l'eau. Avantageusement, l'agent de coagulation est un borate ou du sulfate d'alumine.

De même, l'invention propose une troisième variante d'application dans le domaine de la construction de telles fibres, de verre ou de roche ainsi revêtues à la réalisation d'un revêtement, en particulier isolant sur un support, consistant essentiellement à projeter sur le support simultanément d'une part les fibres revêtues de leur polymère réactivable, dont les flocons ou amas élémentaires sont mélangés avec de l'agent de coagulation, d'autre part de l'eau contenant en suspension de l'agent de coagulation.

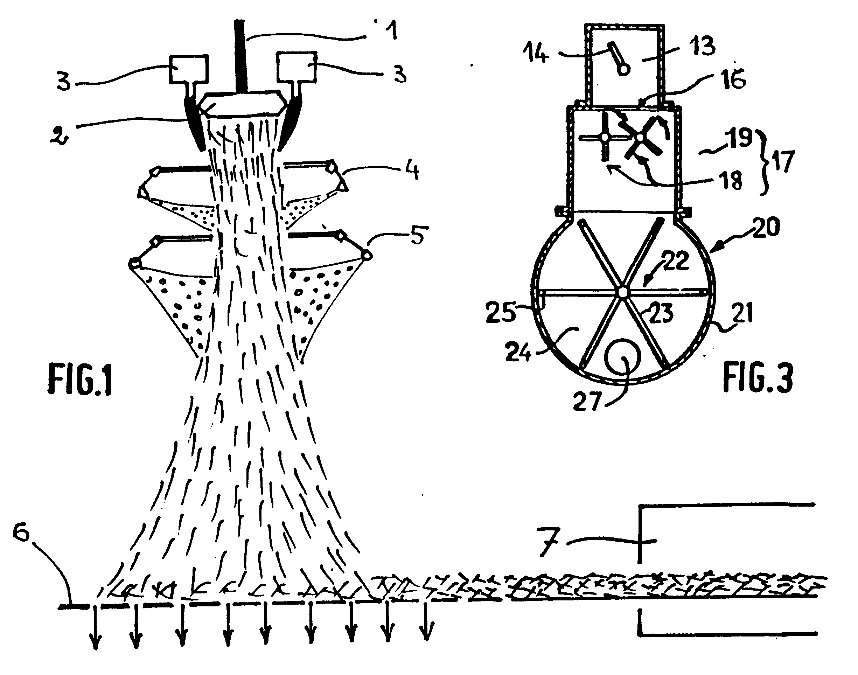

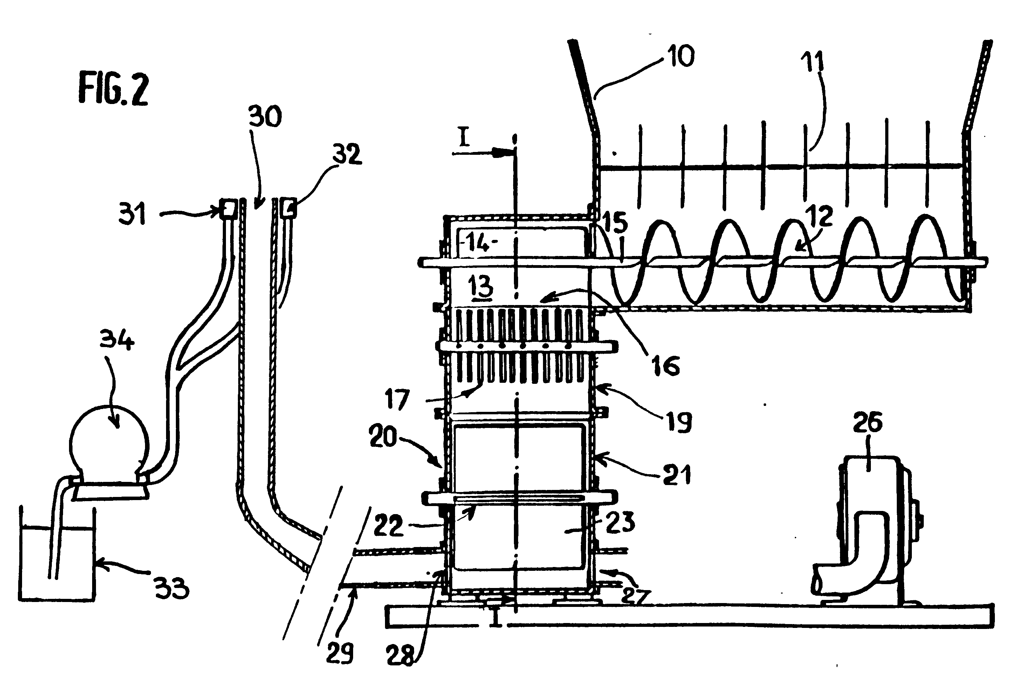

L'invention sera maintenant décrite plus en détail en référence aux figures jointes qui représentent :
. figure 1: une vue schématique d'une unité de fabrication et de revêtement de fibres selon l'invention,
. figure 2: une vue schématique en coupe longitudinale d'un dispositif pour projeter les fibres, et un liquide sur un support,
. figure 3: une coupe selon I.I du dispositif selon la figure 2.

L'invention concerne des fibres de verre ou de roche du type destiné à consittuer un matelas de laine isolante, aptes à être projetées sur un support pour y réaliser un revêtement par exemple isolant.

L'invention propose de préparer des fibres traitées, qu'on pourra stocker puis utiliser ultérieurement pour constituer un revêtement d'un support en les projetant contre ce support, la liaison avec le support et les différentes fibres entre elles s'opérant grâce aux produits de traitement des fibres présents sur les fibres, qui sont réactivés et réticulent grâce à l'adjonction d'un nombre limité de constituants supplémentaires et dans un mode de réalisation particulièrement avantageux grâce à l'adjonction d'eau uniquement. Ce traitement des fibres consiste essentiellement en leur revêtement par un polymère modifié à base d'alcool polyvinylique présentant des capacités d'adhérence sur ces fibres, des capacités de réaction ultérieure avec l'eau.

L'adhérence sur les fibres de verre ou de roche résulte de la présence dans la chaine du polymère de fonctions du type cationique ou carboxylique.

Avantageusement cette adhérence sur les fibres peut être améliorée et/ou complétée par l'adjonction d'un agent tensio-actif du type oxyde d'amine, lauryle d'amine, qui favorise le mouillage des fibres, l'étalement de la solution de polymère et donc la réalisation d'un film de gainage sur la majeure partie de la surface desdites fibres.

La capacité de réactivation par l'eau dépend également de fonctions présentes dans la chaine du polymère. Des fonctions carboxyliques en supplément de celles qui auraient pu être monopolisées pour réaliser l' accrochage sur les fibres, peuvent s'hydrolyser rapidement.

Cette capacité du polymère à être réactivé par l'eau peut avantageusement être renforcée en faisant appel à des polymères de l'alcool polyvinylique incomplètement saponifiés. Le taux de saponification peut ainsi être limité une valeur de l'ordre de 65 à 85% et de préférence de l'ordre de 74 à 80%.

En outre, il importe que ce polymère déposé sur les fibres ne se réticule pas, ou tout du moins pas complètement aux températures qu'il aura à subir lorsqu'il sera déposé sur les fibres de façon à conserver ses capacités à être réactivé par l'eau. Ainsi s'il est déposé sur des fibres de verre ou de roche juste après leur fibrage, il devra pouvoir rester incomplètement réticulé et en général réactivable à l'eau, malgré des températures de l'ordre de 100 à 150°C que devront subir lesdites fibres pour terminer leur cycle de fabrication.

Par ailleurs, il faut que ce polymère puisse être facilement distribué, donc il faut que mis en solution, il puisse circuler dans les pompes et organes de distribution sur les fibres. Ainsi, une viscosité d'une solution aqueuse de 4 à 10% de ce polymère à 20°C, de l'ordre de 5 à 6 centipoises convient. Cette faible viscosité aura aussi une incidence favorable sur la séparation ultérieure du feutre de fibres fabriqué, en flocons de fibres et sur le remouillage de la gaine de polymère des fibres lors de la projection sur chantier avant formation d'un gel.

Parmi les polymères qui possédent ces caractéristiques et qui conviennent donc, citons celui ainsi référencé : "PVA KL 506 de la Société KURARAY CO, LTD - OSAKA".

Les fibres objet de l'invention sont donc traitées comme expliqué ci-après.

Après le fibrage, c'est-à-dire après que les fibres aient été fabriquées, par exemple pour des fibres de verre, après fibrage du verre arrivant en un filet 1 dans une assiette ou centrifugeur 2, chauffé et en rotation, étirage dans les flammes de brûleurs 3, éventuellement aspersion par de l'eau notamment par une première couronne 4 de pulvérisateurs, lesdites fibres, dans une zone où leur répartition est encore homogène, sont soumises à une seconde pulvérisation à l'aide de la solution aqueuse du polymère de gainage de l'invention, par une seconde couronne 5 de pulvérisateurs. Les fibres ainsi revêtues sont reçues sur un tapis récepteur 6 d'un convoyeur, au travers duquel s'exerce une dépression. Le feutre ainsi constitué par l'ensemble des fibres est ensuite transféré dans une étuve 7 où il est séché.

Pendant toutes ces opérations qui suivent le dépôt du polymère à base d'alcool polyvinylique sur les fibres, l'eau excédentaire accompagnant ledit polymère est au moins en partie éliminée si bien que les fibres sortent séches de l'étuve. Une partie non éliminée de l'eau excédentaire peut être piégée dans le revêtement sous forme de gel.

Dans une unité de fabrication de fibres de verre, telle que schématiquement décrite précédemment, des poids d'eau identiques au poids de fibres fabriquées peuvent être éliminés.

Ainsi donc des solutions de polymère à base d'alcool polyvinylique en quantité pondérale identique au poids de fibres à traiter seront pulvérisées à la sortie de la fabrication desdites fibres, le pourcentage en poids de polymère dans la solution étant de l'ordre de 2 à 20% et de préférence de l'ordre de 4 à 10%.

Ces fibres éventuellement compressées pourront être stockées ainsi et n'être ressorties qu'au moment de leur emploi pour réaliser un revêtement, par exemple isolant, d'un support.

Dans une variante de préparation des fibres en vue du même emploi, lesdites fibres prétraitées par le polymère à base d'alcool polyvinylique sont mélangées avec un agent de réticulation ou de coagulation du polymère, du type borate, sous forme de poudre.

Cet agent de réticulation peut être déposé sur le feutre de fibres séchées, et le feutre, éventuellement compressé, peut ê tre stocké ainsi ou immédiatement déchiqueté en flocons de fibres pour faciliter la projection.

L'agent de réticulation peut également n'être ajouté aux fibres qu'après ou pendant leur transformation en flocons. L'ajout de poudre sur la surface du feutre et un ajout complémentaire enduite dans les flocons est également possible.

L'agent de réticulation préféré est du borate de soude penta hydraté sous forme d'une poudre fine de granulométrie inférieure à 40 micromètres. Le borate de soude décahydraté peut également être utilisé.

Des granulométries plus importantes peuvent convenir également, mais la pénétration au sein des fibres est alors moins aisée.

On peut également employer d'autres agents de réticulation aptes à ponter les chaines de polymère, par exemple du sulfate d'alumine.

Les flocons de fibres mélangés à l'agent de réticulation en poudre, éventuellement compressés, peuvent être stockés ainsi jusqu'au moment de leur emploi.

Pour réaliser le revêtement du support, plafond ou autre, il est prévu de projeter sur ledit support, simultanément :
- d'une part, les fibres traitées déchiquetées en flocons qui suivant les cas, sont seules ou mélangées avec l'agent de coagulation,
- d'autre part, de l'eau qui, suivant les cas, contient en solution l'agent de coagulation si les fibres n'en contiennent pas, est seule si les fibres contiennent déjà l'agent de coagulation.

Bien entendu une possibilité intermédiaire existe : dans le cas où seulement une partie de l'agent de réticulation en poudre est ajouté aux fibres, le complément nécessaire dudit agent de réticulation est mis en solution dans l'eau nécessaire à la projection.

Donc les fibres et le liquide sont projetés simultanément sur le support à recouvrir. Du fait de la capacité du polymère qui gaine les fibres à bien se mouiller grâce en particulier aux fonction hydrophiles, notamment carboxyliques libres, le mouillage, la réaction de réticulation avec le borate ou équivalent qui forme un gel adhésif homogène entourant chaque fibre, sont très rapides. La faible viscosité de la solution de polymère employée favorise le mouillage rapide avant formation du gel. Le gainage de chaque fibre particulière par du poly mère apte à réagir, facilite l'obtention d'un revêtement homogène aux propriétés mécaniques intéressantes et régulières.

Avantageusement, pour faciliter et renforcer l'adhésion du revêtement au support, il est recommandé de traiter préalablement ce support en le recouvrant d'une couche de liant constitué par du polymère qui a servi à revêtir chaque fibre, en solution dans l'eau. La teneur en polymère peut être plus importante que dans la solution de revêtement des fibres.

Dans l'un et l'autre des modes de projection, c'est-à-dire dans le cas où fibres et agent de réticulation sont mélangés et où seule de l'eau est à projeter simultanément, ou dans l'autre cas où les fibres sont projetées seules d'une part, l'agent de réticulation étant ajouté d'autre part à l'eau projetée simultanément, le matelas de fibres obtenu présente des propriétés améliorées par rapport aux matelas de l'art antérieur, ces propriétés améliorées étant dues essentiellement au fait que les fibres individuelles ont été traitées et contiennent sur une proportion substantielle de leur surface du polymère apte à former avec l'agent de réticulation un gel adhésif. Contrairement à ce qui se passe dans l'art antérieur, ce gel adhésif se développera donc de façon homogène dans la masse du matelas revêtant le support.

Les charactéristiques de résistance à l'arrachement du matelas ainsi réalisé sur un support, sont environ 50% meilleures que celles mesurées sur le matelas réalisé par une technique de l'art antérieur dans laquelle les fibres n'ont pas été préalablement traitées par le polymère à base d'alcool polyvinylique.

En outre, en particulier dans le cas où seule de l'eau est à ajouter à la fibre prétraitée et mélangée au borate ou équivalent, les opérations de chantier sont simplifiées, les bonnes proportions des différents ingrédients intervenant dans la formation du gel adhésif sont garanties par la préparation de la fibre en unité de fabrication spécialisée ; les risques de gel du liant l'hiver sont supprimés.

En outre, les charges ou pigments de coloration qu'il est toujours possible d'ajouter à la fibre, par exemple en mélange avec le borate ou équivalent, ou avec l'eau, seront mieux répartis dans l'épaisseur du matelas obtenu et ne se rassembleront plus en face inférieure dudit matelas du fait de la migration due à la gravité ; ils seront mieux fixés au niveau de chaque fibre.

Grâce à cette technique, les fibres fines, aptes à procurer une bonne isolation thermique, mais qui du fait de la barrière qu'elles opposent à la pénétration du liant étaient peu employées dans la technique antérieure, sont maintenant utilisables sans restriction.

Une machine à projeter peut être réalisée comme montré sur les figures 2 et 3.

Elle comporte d'une part des moyens de distribution des fibres, d'autre part des moyens de distribution du liquide qui dans la forme préférée de l'invention est uniquement de l'eau.

Les moyens de distribution des fibres comprennent des moyens de chargement tels une trémie 10 dans laquelle est introduite la fibre en flocons mélangée à l'agent de réticulation en poudre dans la mesure où celui-ci n'est pas introduit en solution dans l'eau projetée simultanément. Cette trémie est équipée d'un dévoûteur 11, puis d'un doseur 12 du type à vis.

Les fibres entraînées par la vis du doseur 12 pénètrent ensuite dans une chambre de compression 13 d'où elles sont extraites grâce à l'action d'une ou plusieurs pâles 14 par exemple montées sur le prolongement de l'axe 15 de la vis du doseur 12.

Sous la chambre 13 et communiquant avec elle par l'ouverture 16 se trouve un ensemble de cardage désigné de façon globale en 17.

Dans la forme présentée plus en détail à la figure 3, cet ensemble 17 comprend deux cardes rotatives 18 à l'intérieur d'une boite 19 ; ces cardes étant suffisamment proches de la masse de fibres comprimées dans la chambre 13 pour que leurs dents viennent râcler cettre masse et en détachent des particules fibreuses. Les particules sont ensuite introduites dans un sas alvéolaire 20. Ce sas comprend un stator 21 de forme générale cylindrique dans lequel tourne un rotor 22 muni d'ailettes 23 délimitant des alvéoles 24. L'étanchéité des alvéoles est assurée par des languettes 25 en matériau semi-rigide, fixées sur le pourtour des ailettes 23.

Un courant gazeux, en général de l'air, émis par un surpresseur 26, est admis à la base du stator 21 par l'ouverture 27. L'éjection des particules fibreuses entraînées par le courant gazeux, s'effectue également à la base du stator 21 par l'ouverture 28 dans une conduite 29 aboutissant à une buse de projection 30. Cette buse 30 est encadrée par au moins deux ajutages 31 et 32 de projection de liquide, notamment d'eau seule lorsque le borate ou équivalent a été introduit mélangé aux fibres. Les ajutages 31 et 32 sont alimentés en liquide en réserve dans un réservoir 33, à l'aide d'une pompe 34.

Le matelas de revêtement ainsi obtenu à l'aide de fibres de verre ou de roche est peu coûteux à réaliser. Il possède une résistance mécanique améliorée par rapport aux matelas de l'art antérieur, ses propriétés feu sont intéressantes et son aspect agréable. Les fibres qui ont servi à sa constitution, gainées par leur polymère, se trouvent protégées jusqu'à leur utilisation et pendant tous les traitements de déchiquetage, de cardage, etc... qu'elles subissent. Le matelas de revêtement peut en outre être recouvert par exemple par une peinture.

Ce matelas de revêtement est particulièrement durable et inoffensif vis à vis des supports qu'il revêt. En effet l'effet tampon du borate fixe 1e pH à une valeur de l'ordre de 9 si bien que n'existe pas le risque d'une attaque acide des supports qui peuvent être métalliques ou d'une attaque basique des fibres notamment en verre.

Ce matelas isolant peut être déposé sur des supports aussi bien à température ambiante qu'à température plus élevée, par exemple 200°C.

## Revendications

1. Fibre de verre ou de roche du type destiné à constituer un matelas de laine isolante, caractérisée en ce qu'elle est revêtue d'un film de polymère à base d'alcool polyvinylique possédant des fonctions chimiques hydrophiles libres, réactivables ultérieurement par l'eau pour permettre la réticulation du polymère en présence d'un agent de réticulation adapté.

2. Fibre de verre ou de roche selon la revendication 1, caractérisé en ce que les fonctions hydrophiles sont des fonctions carboxyliques.

3. Fibre de verre ou de roche selon l'une des revendications 1 ou 2, caractérisée en ce que le polymère est incomplètement saponifié, le taux de saponification étant limité à une valeur de l'ordre de 65 à 85% et de préférence de l'ordre de 74 à 80%.

4. Fibre de verre ou de roche selon l'une des revendications précédentes, caractérisée en ce qu'un agent tensio-actif du type oxyde d'amine ou lauryle amine est ajouté au polymère.

5. Fibre de verre ou de roche selon l'une des revendications précédentes, caractérisée en ce qu'elle est mélangée avec de l'agent de coagulation en poudre, le mélange s'obtenant par déchiquetage du feutre de fibres séché et formé à la sortie de l'unité de fabrication et de revêtement par le polymère pour former des flocons ou amas élémentaires auxquels on ajoute la poudre.

6. Procédé de fabrication des fibres de verre ou de roche selon l'une des revendications précédentes, caractérisé en ce que le polymère est distribué sous forme de solution dans l'eau, la viscosité de la solution étant de l'ordre de 5 à 6 centipoises à 20°C et la proportion de polymère par rapport à l'eau étant de l'ordre de 2 à 20% et de préférence de l'ordre de 4 à 10%.

7. Application dans le domaine de la construction des fibres de verre ou de roche selon l'une des revendications 1 à 5 à la réalisation d'un revêtement, en particulier isolant, sur un support, consistant essentiellement à projeter sur le support, simultanément d'une part les fibres revêtues de leur polymère réactivable dont les flocons ou amas élémentaires sont mélangés avec de l'agent de coagulation, d'autre part de l'eau.

8. Application dans le domaine de la construction des fibres de verre ou de roche selon l'une des revendications 1 à 4 à la réalisation d'un revêtement, en particulier isolant, sur un support, consistant essentiellement à projeter sur le support, simultanément d'une part les fibres revêtues de leur polymère réactivable, d'autre part de l'eau contenant en solution de l'agent de coagulation.

9. Application dans le domaine de la construction des fibres de verre ou de roche selon l'une des revendications 1 à 5 à la réalisation d'un revêtement, en particulier isolant, sur un support, consistant essentiellement à projeter sur le support simultanément d'une part les fibres revêtues de leur polymère réactivable, dont les flocons ou amas élémentaires sont mélangés avec de l'agent de coagulation, d'autre part de l'eau contenant en suspension de l'agent de coagulation.

10. Application selon l'une des revendications 7 à 9 caractérisée en ce que l'agent de coagulation est du borate de soude notamment pentahydraté ou éventuellement décahydraté ou du sulfate d'alumine.

11. Application selon l'une des revendications 7 à 10, caractérisée en ce que la quantité pondérale totale d'agent de coagulation est du même ordre de grandeur que celle du polymère.

12. Application selon l'une des revendications 7 à 11, caractérisée en ce que le support est préalablement revêtu d'une couche de polymère en solution dans l'eau.

13. Application selon l'une des revendications 7 à 12, caractérisée en ce que des charges ou pigments de coloration sont ajoutés aux fibres et/ou au liquide projeté.

14. Produit de revêtement, notamment isolant, caractérisé en ce qu'il est obtenu selon l'une des revendications 7 à 13 et en ce qu'il est homogène dans son épaisseur.

## Claims

1. Glass or rock fibre of the type intended for constituting an insulating wool mat, characterised in that it is covered with a polyvinyl alcohol-based polymer film which has free hydrophilic chemical groups and can subsequently be reactivated by water so as to enable the polymer to crosslink in the presence of a suitable crosslinking agent.

2. Glass or rock fibre according to Claim 1, characterised in that the hydrophilic groups are carboxylic groups.

3. Glass or rock fibre according to either of Claims 1 and 2, characterised in that the polymer is incompletely saponified, the rate of saponification being limited to a value of the order of 65 to 85% and preferably of the order of 74 to 80%.

4. Glass or rock fibre according to any one of the preceding claims, characterised in that a surfactant of the amine oxide or lauryl amine type is added to the polymer.

5. Glass or rock fibre according to any one of the preceding claims, characterised in that it is mixed with coagulating agent in powder form, the mixture being obtained as a result of the dried fibre felt being shredded and formed at the outlet of the unit where it is manufactured and covered with the polymer to form flakes or elementary masses to which the powder is added.

6. Process for producing glass or rock fibres according to any one of the preceding claims, characterised in that the polymer is distributed in the form of a solution in water, the viscosity of the solution being of the order of 5 to 6 centipoise at 20°C and the proportion of polymer relative to water being of the order of 2 to 20% and preferably of the order of 4 to 10%.

7. Application within the building products field of glass or rock fibres according to any one of Claims 1 to 5 in the production of a covering, in particular an insulating covering, on a support, essentially consisting in spraying simultaneously onto the support firstly the fibres coated with their reactivatable polymer, of which the flakes or elementary masses are mixed with coagulating agent, and secondly water.

8. Application within the building products field of glass or rock fibres according to any one of Claims 1 to 4 in the production of a covering, in particular an insulating covering, on a support, essentially consisting in simultaneously spraying onto the support firstly the fibres covered with their reactivatable polymer and secondly water containing coagulating agent in solution.

9. Application within the building products field of glass or rock fibres according to any one of Claims 1 to 5 in the production of a covering, in particular an insulating covering, on a support, essentially consisting in simultaneously spraying onto the support firstly the fibres covered with their reactivatable polymer, of which the flakes or elementary masses are mixed with coagulating agent, and secondly water containing coagulating agent in suspension.

10. Application according to any one of Claims 7 to 9, characterised in that the coagulating agent is sodium borate, in particular pentahydrate or optionally decahydrate or aluminium sulphate.

11. Application according to any one of Claims 7 to 10, characterised in that the total quantity by weight of coagulating agent is of the same order of magnitude as that of the polymer.

12. Application according to any one of Claims 7 to 11, characterised in that the support is previously covered with a layer of polymer in solution in water.

13. Application according to any one of Claims 7 to 12, characterised in that colouring pigments or charges are added to the fibres and/or to the sprayed liquid.

14. Covering product, in particular an insulating covering, characterised in that it is obtained according to any one of Claims 7 to 13 and in that it is homogeneous throughout its thickness.

## Patentansprüche

1. Glas- oder Steinfaser eines Typs, der zur Herstellung einer Isolierwollematte vorgesehen ist, **dadurch gekennzeichnet,** daß sie mit einer Schicht eines Polymers auf der Basis Polyvinylalkohol beschichtet ist, das freie hydrophile funktionelle Gruppen aufweist, die danach zur Durchführung der Vernetzung des Polymers in Gegenwart eines geeigneten Vernetzungsmittels durch Wasser reaktivierbar sind.

2. Glas- oder Steinfaser nach Anspruch 1, **dadurch gekennzeichnet,** daß die hydrophilen Gruppen Carboxylgruppen sind.

3. Glas- oder Steinfaser nach Anspruch 1 oder 2, **dadurch gekennzeichnet,** daß das Polymer unvollständig verseift ist und der Verseifungsgrad auf etwa 65 bis 85 und vorzugsweise auf etwa 74 bis 80 % begrenzt ist.

4. Glas- oder Steinfaser nach einem der vorhergehenden Ansprüche, **dadurch gekennzeichnet,** daß dem Polymer ein Netzmittel vom Typ eines Aminoxids oder des Laurylamins zugesetzt wird.

5. Glas- oder Steinfaser nach einem der vorhergehenden Ansprüche, **dadurch gekennzeichnet,** daß sie mit einem pulverförmigen Koagulationsmittel vermischt wird, wobei die Mischung durch Zerreißen des Faserfilzes, der am Ausgang der Anlage zur Fabrikation und Beschichtung mit dem Polymer getrocknet und gebildet ist, zur Herstellung von Flocken oder Elementarhaufen, denen man das Pulver zusetzt, erhalten wird.

6. Verfahren zur Herstellung von Glas- oder Steinfasern nach einem der vorhergehenden Ansprüche, **dadurch gekennzeichnet,** daß das Polymer in Form einer wässrigen Lösung verteilt wird, wobei die Viskosität der wässrigen Lösung etwa 5 bis 6 centipoise bei 20 °C und der Anteil des Polymers etwa 2 bis 20 und vorzugsweise 4 bis 10 % beträgt.

7. Verwendung auf dem Bausektor von Glas- oder Steinfasern nach einem der Ansprüche 1 bis 5 zur Herstellung einer Beschichtung, insbesondere einer Isolierschicht, auf einen Träger, welche im wesentlichen aus dem gleichzeitigen Aufspritzen einerseits der mit dem reaktivierbaren Polymer beschichteten Fasern, deren Flocken oder Elementarhäufen mit dem Koagulationsmittel vermischt sind, und andererseits des Wassers auf den Träger besteht.

8. Verwendung auf dem Bausektor von Glas- oder Steinfasern nach einem der Ansprüche 1 bis 4 zur Herstellung einer Beschichtung, insbesondere einer Isolierschicht, auf einen Träger, welche im wesentlichen aus dem gleichzeitigen Aufspritzen einerseits der mit dem reaktivierbaren Polymer beschichteten Fasern und andererseits der das Koagulationsmittel enthaltenden wässrigen Lösung auf den Träger besteht.

9. Verwendung auf dem Bausektor von Glas- oder Steinfasern nach einem der Ansprüche 1 bis 5 zur Herstellung einer Beschichtung, insbesondere einer Isolierschicht, auf einen Träger, welche im wesentlichen aus dem gleichzeitigen Aufspritzen einerseits der mit dem reaktivierbaren Polymer beschichteten Fasern, deren Flocken oder Elementarhaufen mit dem Koagulationsmittel vermischt sind, und andererseits des das Koagulationsmittel suspendiert enthaltenden Wassers auf den Träger besteht.

10. Anwendung nach einem der Ansprüche 7 bis 9, **dadurch gekennzeichnet,** daß das Koagulationsmittel Natriumborat, insbesondere sein Pentahydrat, oder gegebenenfalls sein Decahydrat, oder Aluminiumsulfat ist.

11. Anwendung nach einem der Ansprüche 7 bis 10, **dadurch gekennzeichnet,** daß die gesamte Gewichtsmenge des Koagulationsmittels in derselben Größenordnung wie die des Polymers liegt.

12. Anwendung nach einem der Ansprüche 7 bis 11, **dadurch gekennzeichnet,** daß der Träger zuvor mit einer Schicht des in wässriger Lösung befindlichen Polymers beschichtet ist.

13. Anwendung nach einem der Ansprüche 7 bis 12, **dadurch gekennzeichnet,** daß den Fasern und/oder der aufgespritzten Flüssigkeit Farbpigmente oder Füllstoffe zugegeben werden.

14. Erzeugnis zur Beschichtung, insbesondere eine Isolierschicht, **dadurch gekennzeichnet,** daß es nach einem der Ansprüche 7 bis 13 hergestellt und daß es in seiner Dicke homogen ist.
